(19) Europäisches Patentamt / European Patent Office / Office européen des brevets

(11) **EP 2 300 382 B1**

(12) **FASCICULE DE BREVET EUROPEEN**

(45) Date de publication et mention
de la délivrance du brevet:
**25.01.2012 Bulletin 2012/04**

(51) Int Cl.:
**C03C 3/087** *(2006.01)* **C03C 4/02** *(2006.01)*
**C03C 4/08** *(2006.01)*

(21) Numéro de dépôt: **09761933.2**

(22) Date de dépôt: **12.06.2009**

(86) Numéro de dépôt international:
**PCT/FR2009/051108**

(87) Numéro de publication internationale:
**WO 2009/150382 (17.12.2009 Gazette 2009/51)**

(54) **OBJET EN VERRE CREUX**

GEGENSTAND AUS HOHLGLAS

OBJECT MADE OF HOLLOW GLASS

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **12.06.2008 FR 0853901**

(43) Date de publication de la demande:
**30.03.2011 Bulletin 2011/13**

(73) Titulaire: **SAINT-GOBAIN EMBALLAGE
92400 Courbevoie (FR)**

(72) Inventeur: **MCDONALD, Neill
F-78000 Versailles (FR)**

(74) Mandataire: **Teyssedre, Laurent
Saint-Gobain Recherche
Département Propriété Industrielle
39 Quai Lucien Lefranc
93300 Aubervilliers Cedex (FR)**

(56) Documents cités:
**WO-A-2006/120663**

- **DATABASE WPI Week 199247 Thomson
Scientific, London, GB; AN 1992-388488
XP002559574 -& SU 1 671 625 A1 (GLASS RES
INST) 23 août 1991 (1991-08-23)**

## Description

La présente invention se rapporte à des objets en verre creux, tels que bouteilles, flacons, ou pots, présentant une transmission lumineuse élevée et une forte protection contre les dégradations dues aux rayonnements.

Il est connu que les rayonnements ultraviolets (UV), en particulier solaires, peuvent interagir avec de nombreux liquides en dégradant parfois leur qualité. C'est par exemple le cas de certains liquides alimentaires, parmi lesquels certains vins comme le champagne, ou la bière, dont la couleur et le goût peuvent être altérés. Il y a donc un réel besoin, aussi bien dans l'industrie agro-alimentaire que cosmétique, de contenants en verre capables d'absorber la plus grande partie des rayonnements ultraviolets.

Des objets creux en verre répondant à cette contrainte sont extrêmement courants, mais ils présentent en général de fortes colorations, donc une très faible transmission lumineuse. Le vin ou la bière sont par exemple souvent conditionnés dans des bouteilles de teinte ambre ou verte, ces colorations étant obtenues par l'ajout de colorants tels que l'oxyde de chrome ou les sulfures d'éléments de transition, tels que les sulfures de fer. Ces récipients teintés présentent toutefois l'inconvénient de masquer la coloration du liquide qu'ils contiennent.

Dans certains cas, il peut être souhaitable, principalement pour des raisons esthétiques, de pouvoir pleinement apprécier la coloration du contenu, et donc de disposer d'objets en verre creux présentant tout à la fois une transmission lumineuse élevée et une teinte neutre, voir par exemple WO2006/120663.

La demande WO2005/075368 décrit des compositions de verre aptes à résoudre ce problème. Ces compositions, qui comprennent de l'oxyde de vanadium et de l'oxyde de manganèse, permettent d'obtenir des objets en verre creux présentant à la fois une faible transmission ultraviolette (pour des longueurs d'ondes inférieures à 380 nm) et une forte transmission lumineuse (dans le domaine de longueurs d'ondes compris entre 380 et 780 nm).

Il est toutefois apparu que la protection conférée par ces objets pouvait à certains égards se révéler insuffisante dans la durée, en particulier pour des liquides tels que des vins blancs, tranquilles ou effervescents, notamment le champagne. L'invention a pour but d'augmenter la durée de vie en étalage de ces liquides, contenus dans des emballages en verre, tout en permettant de visualiser l'aspect desdits liquides.

A cet effet, l'invention a pour objet un objet en verre creux présentant, pour une épaisseur de 5 mm, une transmission lumineuse globale supérieure ou égale à 70%, ladite transmission lumineuse globale étant calculée en prenant en considération l'illuminant C tel que défini par la norme ISO/CIE 10526 et l'observateur de référence colorimétrique C.I.E. 1931 tel que défini par la norme ISO/CIE 10527, et un pouvoir filtrant supérieur ou égal à 65%, notamment 70%, ledit pouvoir filtrant étant défini comme étant égal à la valeur de 100% diminuée de la moyenne arithmétique de la transmission entre 330 et 450 nm. L'objet selon l'invention est tel que sa composition chimique est de type silico-sodo-calcique et comprend les agents absorbants optiques suivants dans une teneur variant dans les limites pondérales ci-après définies :

| | |
|---|---|
| $Fe_2O_3$ (fer total) | 0,01 à 0,15% |
| $TiO_2$ | 0,5 à 3% |
| Sulfures ($S^{2-}$) | 0,0010 à 0,0050% |

L'objet en verre selon l'invention possède de préférence une ou plusieurs des propriétés suivantes, toujours calculées pour une épaisseur de 5 mm :

- une transmission pour une longueur d'ondes de 440 nm inférieure ou égale à 70%, de préférence 65%, notamment 60% et même 55% ou 50%, ou encore 45%, ou 40% et même 35%.
- une transmission ultraviolette, calculée selon la norme ISO 9050, inférieure ou égale à 20%, de préférence 15%, notamment 10% et même 5%.
- une transmission lumineuse supérieure ou égale à 75%, notamment 80%, et même 85%.

Les rayonnements dont la longueur d'ondes est proche de 440 nm se sont révélés être, avec les rayonnements ultraviolets, les plus nocifs pour des liquides tels les vins blancs, notamment le champagne.

De préférence, ces propriétés optiques sont celles du seul objet en verre, à l'exclusion donc de tout revêtement organique ou minéral. Les propriétés optiques dépendent de manière connue de l'épaisseur du verre. Il va de soi que l'objet en verre selon l'invention ne présente pas nécessairement une épaisseur de 5 mm. Il importe en revanche que les propriétés optiques essentielles soient respectées pour une épaisseur équivalente de 5 mm. Dans le cas où l'épaisseur de l'objet n'est pas égale à 5 mm, il est aisé de calculer ces propriétés pour une épaisseur équivalente de 5 mm à partir d'une mesure effectuée sur l'objet, en prenant en compte son épaisseur réelle.

De manière surprenante, cette combinaison de propriétés optiques s'est révélée à même de résoudre le problème technique à la base de l'invention, à savoir l'augmentation de la durée de vie en étalage de certains liquides, en particulier le champagne, tout en permettant de visualiser l'aspect desdits liquides.

Ces deux propriétés (forte transmission lumineuse d'une part et pouvoir filtrant élevé d'autre part) étaient jusqu'à présent jugées incompatibles, puisqu'une transmission lumineuse élevée suppose une forte transmission dans le domaine du visible, donc entre 380 et 780 nm. Ainsi, les emballages existants dont le pouvoir filtrant est élevé présentent une teinte très soutenue (verte ou ambre) et par conséquent une faible transmission lumineuse.

Sauf indications contraires, toutes les compositions sont exprimées en pourcentages pondéraux, et la teneur en un oxyde d'un métal donné correspond à la teneur totale en cet oxyde métallique, sans préjuger du degré d'oxydation réel de l'ion métallique considéré. Lorsque des teneurs préférées, minimales ou maximales, sont données, il est entendu que toute plage résultant d'une combinaison entre une teneur minimale et une teneur maximale fait expressément partie de la présente description.

La composition comprend de préférence une ou plusieurs des limitations suivantes, seules ou en combinaison :

- de préférence, la teneur en oxyde de fer est supérieure ou égale à 0,02%, notamment 0,03% et même 0,04%, ou encore 0,05% ou 0,06% et/ou inférieure ou égale à 0,14%, notamment 0,13% et même 0,12%, voire 0,11% ou 0,10%.
- la teneur en oxyde de titane est de préférence supérieure ou égale à 0,6%, notamment 0,7% et même 0,8% ou 0,9%, ou encore 1% et/ou inférieure ou égale à 2,5%, notamment 2,4%, voire 2,3% et même 2,2% ou encore 2,1%.
- la teneur en sulfures est de préférence supérieure ou égale à 0,0015%, notamment 0,0020% et/ou inférieure ou égale à 0,0040%, voire 0,0035%.

Le rédox, défini par le rapport de la teneur molaire en oxyde ferreux (exprimé en FeO) à la teneur molaire en fer total (exprimé en $Fe_2O_3$), qui est un indicateur de l'état d'oxydoréduction du verre, est de préférence supérieur ou égal à 0,5, notamment 0,55 et même 0,6. Le rédox est généralement contrôlé à l'aide d'agents oxydants tels que le sulfate de sodium, et d'agents réducteurs tels que du coke, dont les teneurs relatives sont ajustées pour obtenir le rédox souhaité.

La composition selon l'invention ne comprend de préférence aucun agent absorbant pour une longueur d'ondes comprise entre 300 et 1000 nm autre que les oxydes de fer et de titane et les ions sulfures. En particulier, la composition selon l'invention ne contient de préférence pas d'agents choisis parmi les agents suivants : les oxydes d'éléments de transition tels que CoO, CuO, $Cr_2O_3$, $V_2O_5$, $MnO_2$, les oxydes de terres rares tels que $CeO_2$, $La_2O_3$, $Er_2O_3$, ou $Nd_2O_3$, ou encore les agents colorants à l'état élémentaire tels que Se, Ag, Cu.

L'utilisation des agents absorbants optiques précités dans les limites de l'invention permet de conférer les propriétés recherchées et aussi d'ajuster au mieux les propriétés optiques et énergétiques du verre.

En règle générale, il est difficile de prévoir les propriétés optiques et énergétiques d'un verre lorsque celui-ci contient plusieurs agents absorbants optiques. Ces propriétés résultent en effet d'une interaction complexe entre les différents agents dont le comportement est en outre lié à la matrice verrière employée et à leur état d'oxydation. Cela est particulièrement le cas pour les compositions selon l'invention, lesquelles contiennent au moins deux éléments existant sous plusieurs valences.

L'expression silico-sodo-calcique est ici utilisée dans le sens large et concerne toute composition de verre constituée d'une matrice verrière qui comprend les constituants suivants (en pourcentage en poids) :

| | |
|---|---|
| $SiO_2$ | 64 - 75 % |
| $Al_2O_3$ | 0 - 5 % |
| $B_2O_3$ | 0 - 5 %, de préférence 0 |
| CaO | 5-15% |
| MgO | 0-10% |
| $Na_2O$ | 10 - 18 % |
| $K_2O$ | 0-5% |
| BaO | 0 - 5 %, de préférence 0. |

On convient ici que la composition de verre silico-sodo-calcique peut comprendre, outre les impuretés inévitables contenues notamment dans les matières premières, une faible proportion (jusqu'à 1 %) d'autres constituants, par exemple des agents aidant à la fusion ou l'affinage du verre ($SO_3$, Cl, $Sb_2O_3$, $As_2O_3$) ou provenant d'un ajout éventuel de calcin recyclé dans le mélange vitrifiable.

Dans les verres selon l'invention, la silice est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 64 %, la résistance hydrolytique du verre décroît rapidement et la transmission dans le visible diminue également.

L'alumine $Al_2O_3$ joue un rôle particulièrement important sur la résistance hydrolytique du verre. Lorsque le verre selon l'invention est destiné à former des corps creux contenant des liquides, la teneur en alumine est de préférence supérieure ou égale à 1 %.

Les oxydes alcalins $Na_2O$ et $K_2O$ facilitent la fusion du verre et permettent d'ajuster sa viscosité aux températures élevées afin de le maintenir proche de celle d'un verre standard. $K_2O$ peut être utilisé jusqu'à 5 % car au-delà se pose le problème du coût élevé de la composition. Par ailleurs, l'augmentation du pourcentage de $K_2O$ ne peut se faire, pour l'essentiel, qu'au détriment de $Na_2O$, ce qui contribue à augmenter la viscosité. La somme des teneurs en $Na_2O$ et $K_2O$, exprimées en pourcentages pondéraux, est de préférence égale ou supérieure à 10 % et avantageusement inférieure à 20 %. Si la somme de ces teneurs est supérieure à 20 % ou si la teneur en $Na_2O$ est supérieure à 18 %, la résistance hydrolytique est fortement réduite. Les verres selon l'invention sont de préférence exempts d'oxyde de lithium $Li_2O$ du fait de son coût élevé.

Les oxydes alcalino-terreux permettent d'adapter la viscosité du verre aux conditions d'élaboration.

MgO peut être utilisé jusqu'à 10 % environ et sa suppression peut être compensée, au moins en partie, par une augmentation de la teneur en $Na_2O$ et/ou $SiO_2$. De préférence, la teneur en MgO est inférieure à 5 % et de manière particulièrement avantageuse est inférieure à 2 % ce qui a pour effet d'augmenter la capacité d'absorption dans l'infrarouge sans nuire à la transmission dans le visible. De faibles teneurs en MgO permettent en outre de diminuer le nombre de matières premières nécessaires à la fusion du verre.

BaO a une influence beaucoup plus faible que CaO et MgO sur la viscosité du verre et l'augmentation de sa teneur se fait essentiellement au détriment des oxydes alcalins, de MgO et surtout de CaO. Toute augmentation de BaO contribue à augmenter la viscosité du verre aux basses températures. De manière préférée, les verres selon l'invention sont exempts de BaO et également d'oxyde de strontium (SrO), ces éléments présentant un coût élevé.

Outre le respect des limites définies précédemment pour la variation de la teneur de chaque oxyde alcalino-terreux, il est préférable pour obtenir les propriétés de transmission recherchées de limiter la somme des pourcentages pondéraux de MgO, CaO et BaO à une valeur égale ou inférieure à 15 %.

La composition de verre conforme à l'invention est apte à être fondue dans les conditions de production du verre destiné au formage de corps creux par les techniques de pressage, de soufflage ou encore de moulage. La fusion a généralement lieu dans des fours à flamme, éventuellement pourvus d'électrodes assurant le chauffage du verre dans la masse par passage du courant électrique entre les deux électrodes. Pour faciliter la fusion, et notamment rendre celle-ci mécaniquement intéressante, la composition de verre présente avantageusement une température correspondant à une viscosité $\eta$ telle que log $\eta$ = 2 qui est inférieure à 1500°C. De préférence encore, la température correspondant à la viscosité $\eta$ telle que log $\eta$ = 3,5 (notée T(log $\eta$ = 3,5)) et la température au liquidus (notée $T_{liq}$) satisfont la relation :

$$T(\log \eta = 3,5) - T_{liq} > 20°C$$

et mieux encore :

$$T(\log \eta = 3,5) - T_{liq} > 50°C$$

L'ajout des oxydes absorbants optiques peut être effectué dans le four (on parle alors de « coloration en bassin ») ou dans les canaux transportant le verre entre le four et les installations de formage (on parle alors de « coloration en feeder »). La coloration en feeder nécessite une installation particulière d'ajout et de mélange mais présente en revanche des avantages de souplesse et de réactivité particulièrement appréciés lorsque la production d'une gamme étendue de teintes et/ou de propriétés optiques particulières est requise. Dans le cas particulier de la coloration en feeder, les agents absorbants optiques sont incorporés dans des frittes de verre ou des agglomérés, lesquels sont ajoutés à un verre clair pour former après homogénéisation les verres selon l'invention. On peut employer des frittes différentes pour chaque oxyde ajouté, mais il peut être avantageux dans certains cas de disposer d'une fritte unique comprenant tous les agents absorbants optiques utiles. Il est souhaitable que les teneurs en oxydes absorbants optiques dans les frittes ou les agglomérés employés soient comprises entre 5 et 30%, de manière à ne pas dépasser des taux de dilution de fritte dans le verre fondu supérieurs à 10%, notamment 5%, et avantageusement 2%. Au delà, il devient en effet difficile d'homogénéiser convenablement le verre fondu tout en conservant de fortes tirées compatibles avec un faible coût économique global du procédé.

L'invention a donc également pour objet un procédé de fabrication d'un verre présentant une composition selon l'invention, comprenant une étape de fusion d'une partie du mélange vitrifiable, une étape de transport du verre fondu jusqu'au dispositif de formage, pendant laquelle on ajoute audit verre fondu des oxydes par le biais de frittes de verre ou d'agglomérés, au moins une partie des agents absorbants optiques étant apportés à la composition durant cette étape, et une étape de formage dudit verre pour obtenir un objet creux.

De préférence, la totalité des agents absorbants optiques, à l'exception du fer, sont apportés à la composition durant l'étape de transport du verre fondu jusqu'au dispositif de formage.

Le procédé de fabrication d'un verre présentant une composition selon l'invention, comprend une étape de fusion du mélange vitrifiable dans un four de fusion, ledit mélange vitrifiable apportant l'intégralité des oxydes compris dans ladite composition, et une étape de formage.

Tout procédé permettant d'obtenir un objet en verre creux est utilisable. A titre d'exemples non limitatifs, on peut citer les procédés « pressé-soufflé » et « soufflé-soufflé » bien connus de l'homme du métier.

L'objet selon l'invention, est de préférence une bouteille, en particulier susceptible de contenir ou contenant de la bière ou du vin blanc, tranquille ou effervescent, en particulier du champagne.

La présente invention sera mieux comprise à la lecture de la description détaillée ci-après d'exemples de réalisation non limitatifs illustrés par le tableau 1.

Dans ces exemples, on indique les valeurs des propriétés optiques suivantes calculées sous une épaisseur de verre de 5 mm à partir de spectres expérimentaux :

- la transmission lumineuse globale ($TL_C$), calculée entre 380 et 780 mm. Ces calculs sont effectués en prenant en considération l'illuminant C tel que défini par la norme ISO/CIE 10526 et l'observateur de référence colorimétrique C.I.E. 1931 tel que défini par la norme ISO/CIE 10527.

- le pouvoir filtrant (noté PF), défini comme étant égal à la valeur de 100% diminuée de la moyenne arithmétique de la transmission entre 330 et 450 nm,
- la transmission ultraviolette (TUV) calculée selon la norme ISO 9050,
- la transmission pour une longueur d'ondes 440 nm ($T_{440}$).

Sont également indiquées dans le tableau 1 les teneurs pondérales en agents absorbants optiques.

Les compositions figurant dans le tableau 1 sont réalisées à partir de la matrice verrière suivante, dont les teneurs sont exprimées en pourcentages pondéraux, celle-ci étant corrigée au niveau de la silice pour s'adapter à la teneur totale en agents colorants ajoutés.

| | |
|---|---|
| $SiO_2$ | 71,0 % |
| $Al_2O_3$ | 1,40 % |
| $Fe_2O_3$ | 0,05% |
| CaO | 12,0 % |
| MgO | 0,1 % |
| $Na_2O$ | 13,0 % |
| $K_2O$ | 0,35 %. |

**Tableau 1**

| Exemple | 1 | 2 | 3 |
|---|---|---|---|
| $Fe_2O$ (%) | 0,05 | 0,1 | 0,1 |
| Rédox | 0,7 | 0,6 | 0,63 |
| $TiO_2$ (%) | 1,0 | 1,0 | 2,0 |
| $S^{2-}$ (%) | 0,0035 | 0,0020 | 0,0025 |
| | | | |
| $TL_C$ (%) | 78,2 | 73,9 | 72,1 |
| PF (%) | 66,7 | 67,2 | 73,4 |
| TUV (%) | 26,3 | 25,9 | 18,7 |
| $T_{440}$ (%) | 38,4 | 37,6 | 33,8 |

**Revendications**

1. Objet en verre creux présentant, pour une épaisseur de 5 mm, une transmission lumineuse globale supérieure ou égale à 70%, ladite transmission lumineuse globale étant calculée en prenant en considération l'illuminant C tel que défini par la norme ISO/CIE 10526 et l'observateur de référence colorimétrique C.I.E. 1931 tel que défini par la norme ISO/CIE 10527, et un pouvoir filtrant supérieur ou égal à 65%, notamment 70%, ledit pouvoir filtrant étant défini comme étant égal à la valeur de 100% diminuée de la moyenne arithmétique de la transmission entre 330 et 450 nm, ledit objet ayant une composition chimique de type silico-sodo-calcique qui comprend
$SiO_2$ 64 - 75 % ;
$Al_2O_3$ 0-5%;
$B_2O_3$ 0-5 %;
CaO 5-15%;
MgO 0-10%;
$Na_2O$ 10-18 %;
$K_2O$ 0-5%
BaO 0-5% et qui comprend les agents absorbants optiques suivants dans une teneur variant dans les limites pondérales ci-après définies :

| | |
|---|---|
| $Fe_2O_3$ (fer total) | 0,01 à 0,15% |
| $TiO_2$ | 0,5 à 3% |
| Sulfures ($S^{2-}$) | 0,0010 à 0,0050%. |

2. Objet selon la revendication 1, présentant pour une épaisseur de 5 mm une transmission pour une longueur d'ondes de 440 nm inférieure ou égale à 70%.

3. Objet selon l'une des revendications précédentes, présentant une transmission ultraviolette, calculée selon la norme ISO 9050, inférieure ou égale à 20%.

4. Objet selon la revendication précédente, présentant une transmission ultraviolette inférieure ou égale à 10%, notamment 5%.

5. Objet selon l'une des revendications précédentes, présentant une transmission pour une longueur d'ondes de 440 nm inférieure ou égale à 50%, notamment 40%.

6. Objet selon l'une des revendications précédentes, présentant une transmission lumineuse supérieure ou égale à 75%, notamment 80%, et même 85%.

7. Objet selon l'une des revendications précédentes, tel que le rédox du verre est supérieur ou égal à 0,5.

8. Objet selon l'une des revendications précédentes, tel que la teneur en oxyde de fer est comprise entre 0,04% et 0,12%.

9. Objet selon l'une des revendications précédentes, tel que la teneur en oxyde de titane est comprise entre 0,8% et 2,2%.

10. Objet selon l'une des revendications précédentes, tel que la teneur en en sulfures est comprise entre 0,0015% et 0,0040%.

**11.** Objet selon l'une des revendications précédentes, qui est une bouteille contenant de la bière ou du vin blanc, notamment du champagne.


**Claims**

**1.** A hollow glass article having, for a thickness of 5 mm, an overall light transmission greater than or equal to 70%, said overall light transmission being calculated by taking into consideration the illuminant C as defined by the ISO/CIE 10526 standard and the CIE 1931 standard colorimetric observer as defined by the ISO/CIE 10527 standard, and a filtering power greater than or equal to 65%, especially 70%, said filtering power being defined as being equal to the value of 100% reduced by the arithmetic mean of the transmission between 330 and 450 nm, said article having a chemical composition of soda-lime-silica type, which comprises

| | |
|---|---|
| $SiO_2$ | 64-75% |
| $Al_2O_3$ | 0 - 5 % |
| $B_2O_3$ | 0-5% |
| CaO | 5-15% |
| MgO | 0-10% |
| $Na_2O$ | 10-18% |
| $K_2O$ | 0-5% |
| BaO | 0-5% |

and which comprises the following optical absorbent agents in a content that varies within the weight limits defined below:

| | |
|---|---|
| $Fe_2O_3$ (total iron) | 0.01 to 0.15% |
| $TiO_2$ | 0.5 to 3% |
| Sulfides ($S^{2-}$) | 0.0010 to 0.0050%. |

**2.** The article as claimed in claim 1, having, for a thickness of 5 mm, a transmission for a wavelength of 440 nm that is less than or equal to 70%.

**3.** The article as claimed in either of the preceding claims, having an ultraviolet transmission, calculated according to the ISO 9050 standard, of less than or equal to 20%.

**4.** The article as claimed in the preceding claim, having an ultraviolet transmission of less than or equal to 10%, especially 5%.

**5.** The article as claimed in one of the preceding claims, having a transmission, for a wavelength of 440 nm, of less than or equal to 50%, especially 40%.

**6.** The article as claimed in one of the preceding claims, having a light transmission greater than or equal to 75%, especially 80%, and even 85%.

**7.** The article as claimed in one of the preceding claims, such that the redox of the glass is greater than or equal to 0.5.

**8.** The article as claimed in one of the preceding claims, such that the iron oxide content is between 0.04% and 0.12%.

**9.** The article as claimed in one of the preceding claims, such that the titanium oxide content is between 0.8% and 2.2%.

**10.** The article as claimed in one of the preceding claims, such that the content of sulfides is between 0.0015% and 0.0040%.

**11.** The article as claimed in one of the preceding claims, which is a bottle containing beer or white wine, especially champagne.


**Patentansprüche**

**1.** Gegenstand aus Hohlglas, der bei einer Dicke von 5 mm eine Gesamtlichttransmission von über oder gleich 70 % aufweist, wobei die Gesamtlichttransmission unter Berücksichtigung der Lichtart C, wie sie durch die ISO/CIE-Norm 10526 definiert ist, und des farbmetrischen Normalbeobachters CIE 1931, wie er durch die ISO/CIE-Norm 10527 definiert ist, berechnet wird, sowie ein Filtriervermögen von über oder gleich 65 %, insbesondere 70 %, wobei das Filtriervermögen als gleich dem Wert von 100 %, vermindert um den arithmetischen Mittelwert der Transmission zwischen 330 und 450 nm definiert ist, wobei der Gegenstand eine chemische Zusammensetzung vom Kalk-Natron-Silikat-Typ aufweist, die umfasst

| | |
|---|---|
| $SiO_2$ | 64 bis 75 %, |
| $Al_2O_3$ | 0 bis 5%, |
| $B_2O_3$ | 0 bis 5 %, |
| CaO | 5 bis 15 %, |
| MgO | 0 bis 10 %, |
| $Na_2O$ | 10 bis 18 %, |
| $K_2O$ | 0 bis 5%, |
| BaO | 0 bis 5% |

und die die folgenden optischen Absorptionsmittel in einem Gehalt, welcher innerhalb der nachstehend definierten Gewichtsgrenzen variiert, umfasst:

$Fe_2O_3$ (Gesamteisen)     0,01 bis 0,15 %

$TiO_2$                     0,5 bis 3 %

Sulfide ($S^{2-}$)           0,0010 bis 0,0050 %.

**2.** Gegenstand nach Anspruch 1, der bei einer Dicke von 5 mm eine Transmission für eine Wellenlänge von 440 nm von unter oder gleich 70 % aufweist.

**3.** Gegenstand nach einem der vorstehenden Ansprüche, der eine nach der ISO-Norm 9050 berechnete UV-Transmission von unter oder gleich 20 % aufweist.

**4.** Gegenstand nach dem vorstehenden Anspruch, der eine UV-Transmission von unter oder gleich 10 %, insbesondere 5 % aufweist.

**5.** Gegenstand nach einem der vorstehenden Ansprüche, der eine Transmission für eine Wellenlänge von 440 nm von unter oder gleich 50 %, insbesondere 40 % aufweist.

**6.** Gegenstand nach einem der vorstehenden Ansprüche, der eine Lichttransmission von über oder gleich 75 %, insbesondere 80 % und sogar 85 % aufweist.

**7.** Gegenstand nach einem der vorstehenden Ansprüche, welcher derart ist, dass der Redoxgrad des Glases mehr als oder gleich 0,5 beträgt.

**8.** Gegenstand nach einem der vorstehenden Ansprüche, welcher derart ist, dass der Eisenoxidgehalt im Bereich zwischen 0,04 % und 0,12 % liegt.

**9.** Gegenstand nach einem der vorstehenden Ansprüche, welcher derart ist, dass der Titanoxidgehalt im Bereich zwischen 0,8 % und 2,2 % liegt.

**10.** Gegenstand nach einem der vorstehenden Ansprüche, welcher derart ist, dass der Gehalt an Sulfiden im Bereich zwischen 0,0015 % und 0,0040 % liegt.

**11.** Gegenstand nach einem der vorstehenden Ansprüche, der eine Flasche ist, die Bier oder Weißwein, insbesondere Champagner enthält.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2006120663 A

• WO 2005075368 A